# EUROPEAN PATENT SPECIFICATION

(11) **EP 0 819 557 B1**
(45) Date of publication and mention of the grant of the patent: **20.12.2000**
(21) Application number: 97112140.5
(22) Date of filing: 16.07.1997
(51) Int. Cl.: B60H 1/00

(54) **Ventilation plant for a passenger transport vehicle, in particular a bus**
Lüftungsanlage für Passagierfahrzeug, insbesondere Omnibus
Installation de ventilation pour véhicule de transport de passagers, notamment pour autobus

(30) Priority: 19.07.1996 IT TO960629
(43) Date of publication of application: 21.01.1998
(73) Proprietor: IRISBUS ITALIA S.P.A., 10156 Torino (IT)
(72) Inventor: Fornari, Pierfortunato, 26030 Cappella Picenardi (IT)
(74) Representative: Franzolin, Luigi

(56) References cited:
- DE-U- 7 925 325
- FR-A- 2 464 841
- US-A- 2 673 512

## Description

The present invention relates to a ventilation plant for a passenger transport vehicle, in particular a bus.

Ventilation plants for buses are known and substantially comprise ventilation and air conditioning means housed in a chamber obtained within an upper portion of the bus, external air intake means communicating with the chamber and borne by an upper wall of the bus, a pair of ventilation ducts communicating with the chamber and adapted to distribute air into the passenger space of the bus, first interceptor means interposed between the chamber and the air intake means that can move for the selective connection of the chamber with these air intake means and first actuator means controlling these first interceptor means.

Other types of ventilation plants for buses are also known in which provision is made for the recycling of the air. These plants differ from those described above in that the chamber communicates with the passenger space of the bus via a relative opening; these plants consequently comprise second interceptor means that can move for the selective connection of the chamber with the passenger space of the bus and second actuator means controlling the second interceptor means.

An example of such ventilation plants for buses is disclosed in DE 79 25 325 U.

The ventilation plants described above have the following drawbacks. In the first instance, the above-mentioned first and second control actuator means are relatively complex and costly. As a result of the position of the air intake means, the path of the air does not, moreover, develop in a plane way but is substantially formed by a first substantially vertical portion linked to a second substantially horizontal portion. The combination of these factors causes a relatively complex configuration of the layout of the plant and a bulk that is not negligible, especially as regards the chamber in which the ventilation and conditioning means are housed. In order, therefore, to prevent an excessive reduction of the space available for passengers, the upper portion of the bus has a zone that projects upwards at the location of the chamber and the upper wall of the bus is formed by two horizontal sections connected together by a vertical section. It will be appreciated that this shape of the upper portion of the bus is not aesthetically pleasing, makes the vehicle less aerodynamic and entails high production costs.

The object of the present invention is to provide a passenger transport vehicle, in particular a bus, with a ventilation plant which makes it possible to remedy the drawbacks connected with the known plants described above in an simple, reliable and economic way.

This object is achieved by a passenger transport vehicle, in particular a bus, as claimed in Claim 1.

For a better understanding of the present invention, a preferred embodiment is described below by way of non-limiting example with reference to the accompanying drawings, in which:
Fig. 1 is a diagrammatic side view of a passenger space of a bus provided with a ventilation plant of the present invention, with some pans removed for clarity;
Fig. 2 is a diagrammatic perspective view of the plant of Fig. 1, with some parts removed for clarity;
Fig. 3 is a diagrammatic perspective view of the plant of Fig. 1, in a different operating position, with some parts removed for clarity;
Fig. 4 is a top view of the plant of Fig. 1, with some parts removed for clarity;
Fig. 5 is a top view of the plant of Fig. 3, with some parts removed for clarity;
Fig. 6 is a front view of a detail of the plant of Fig. 1;
Fig. 7 is a top view of the detail of Fig. 6;
Fig. 8 is a top view of a possible variant of the plant of Fig. 1, with some parts removed for clarity.

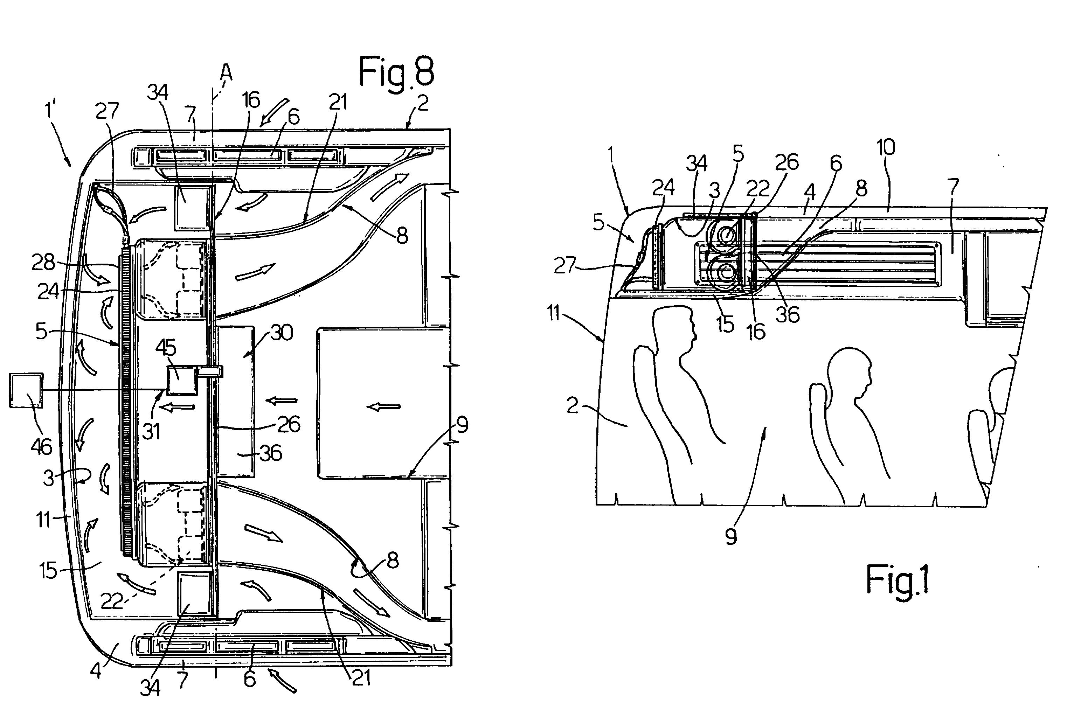

In Figs. 1 to 5, a ventilation plant for a bus 2 (shown only in part) is shown overall by 1.

The plant 1 substantially comprises air conditioning and ventilation means 5 housed in a chamber 3 of substantially parallelepipedic shape obtained within an upper portion 4 of the bus 2, a pair of known air intakes 6 provided in respective opposite, substantially plane lateral walls 7 of the bus 2 and communicating with the chamber 3 and a pair of ventilation ducts 8 communicating with this chamber 3, extending longitudinally within the bus 2 along the respective walls 7 and provided with a plurality of vents (not shown) for the distribution of air into the passenger space 9 of the bus 2.

The chamber 3 is in particular provided at the location of a zone of connection of respective, substantially plane, upper and rear walls 10, 11 of the bus 2 and is bounded by relative end sections of the walls 7, 10, 11 and by a pair of substantially plane lower and front walls 15, 16 respectively facing the walls 10, 11 and facing towards the interior of the passenger space 9.

The wall 16 has five substantially rectangular through openings 18, 19, 20 having axes at right angles to the wall 16 and aligned with one another. More particularly, the opening 18 is provided centrally in the wall 16 and is adapted to bring the chamber 3 into communication with the passenger space 9; the openings 19 are disposed on opposite lateral sides of the opening 18 and bring the chamber 3 into communication with the respective ducts 8; lastly, the openings 20 are each interposed between a relative opening 19 and a relative wall 7 and communicate with the corresponding air intakes 6 via relative air conveyor ducts 21, each of which extends in a direction substantially parallel to a relative duct 8 and is interposed between the latter and the relative wall 7.

Each air intake 6 defines a starting portion of a substantially horizontal U-shaped path P of the air extending from this air intake 6 to a relative duct 8 via a corresponding duct 21 and the chamber 3.

The air conditioning and ventilation means 5 comprise a pair of ventilator units 22 disposed at the location of the relative openings 19 and housed in respective tubular housings 23 coaxial with these openings 19 and secured to the walls 15 and 16, and a substantially rectangular, plane air heating unit 24 secured to the wall 15, extending parallel to the wall 16 on the opposite side thereof with respect to the ventilator units 22 and facing the openings 18 and 19; the air conditioning and ventilation means 5 also comprise an electrovalve 27 connected to the unit 24 and a filter 28 disposed upstream of the unit 24 along the path P.

The plant 1 further comprises an air flow interceptor unit 30 that can be moved for the selective connection of the chamber 3 with the air intakes 6 and the passenger space 9 and a control unit 31 for the unit 30.

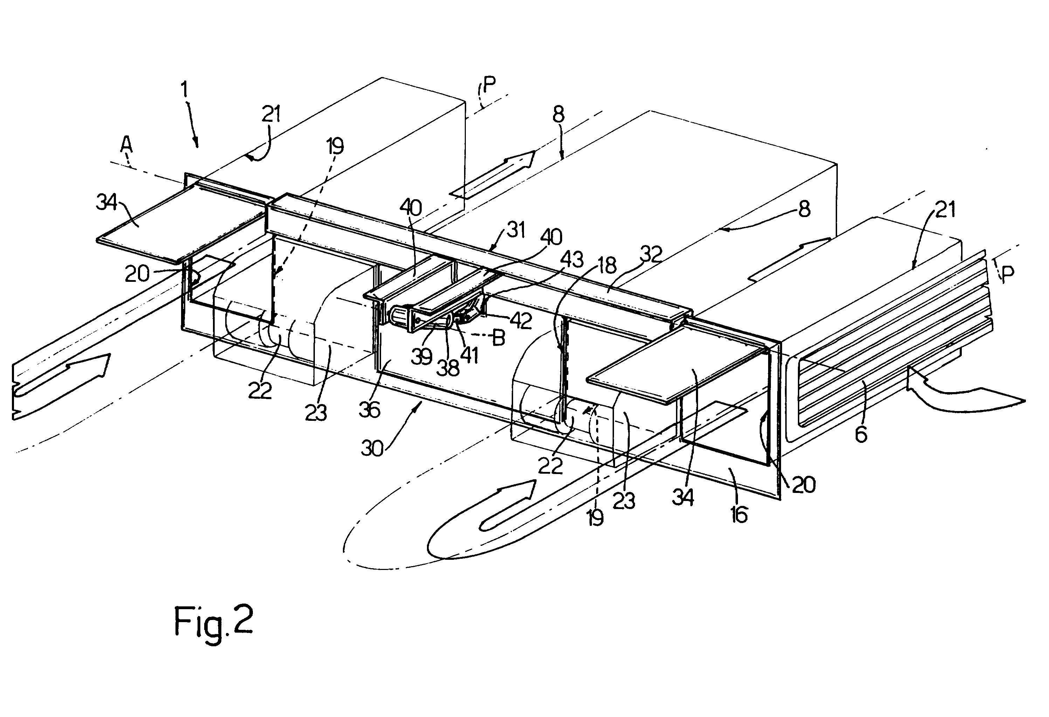

With particular reference to Figs. 2, 3, 6 and 7, the unit 30 comprises a support member 32 secured to the wall 16 and extending substantially along an axis A at right angles to the walls 7, a shaft 26 of axis A supported by the member 32 so as to rotate about this axis A by means of a pair of bearings 33, a pair of plane, rectangular, first flap members 34 radially snap-locked on respective opposite axial end portions 35 of the shaft 26 and aligned angularly with one another, and a second plane, rectangular flap member 36 radially snap-locked on a central portion 37 of the shaft 26 and spaced angularly by 90° from the members 34.

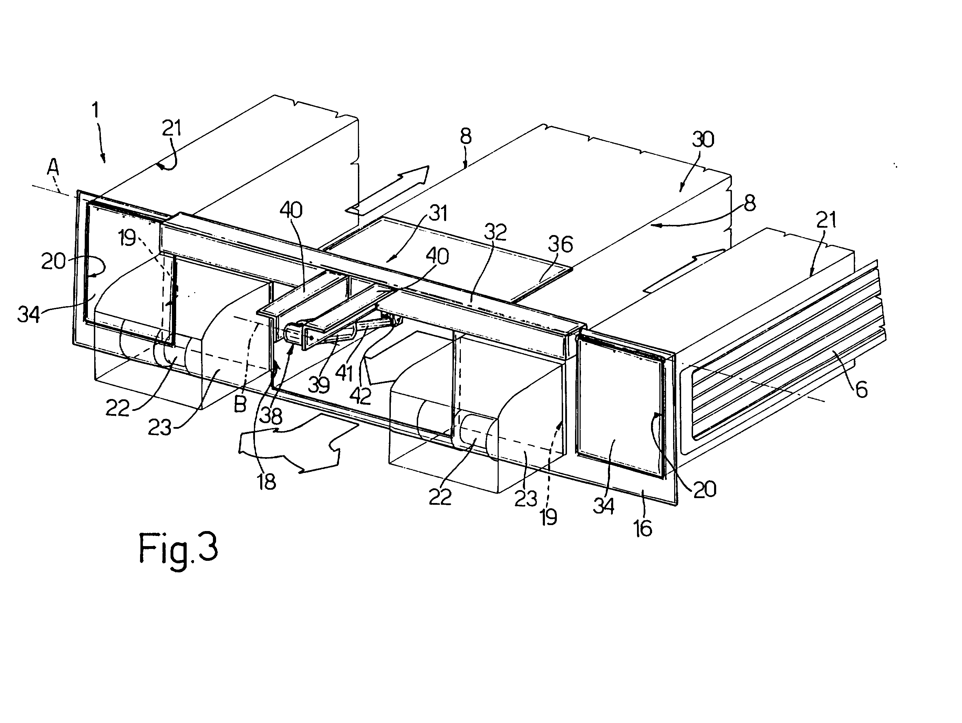

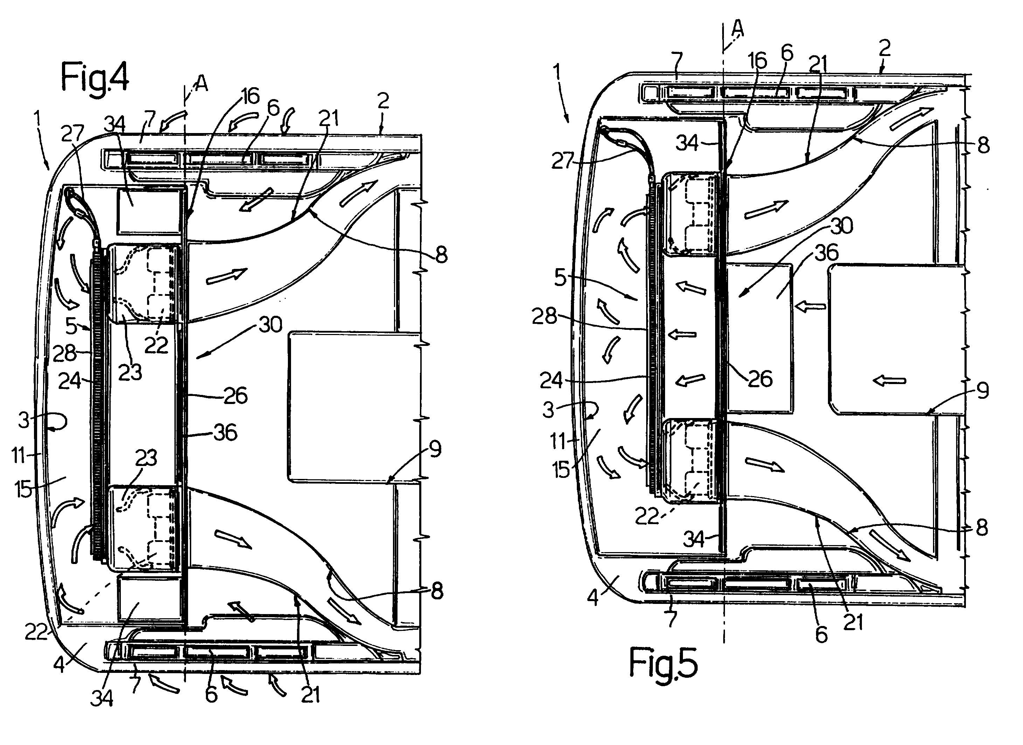

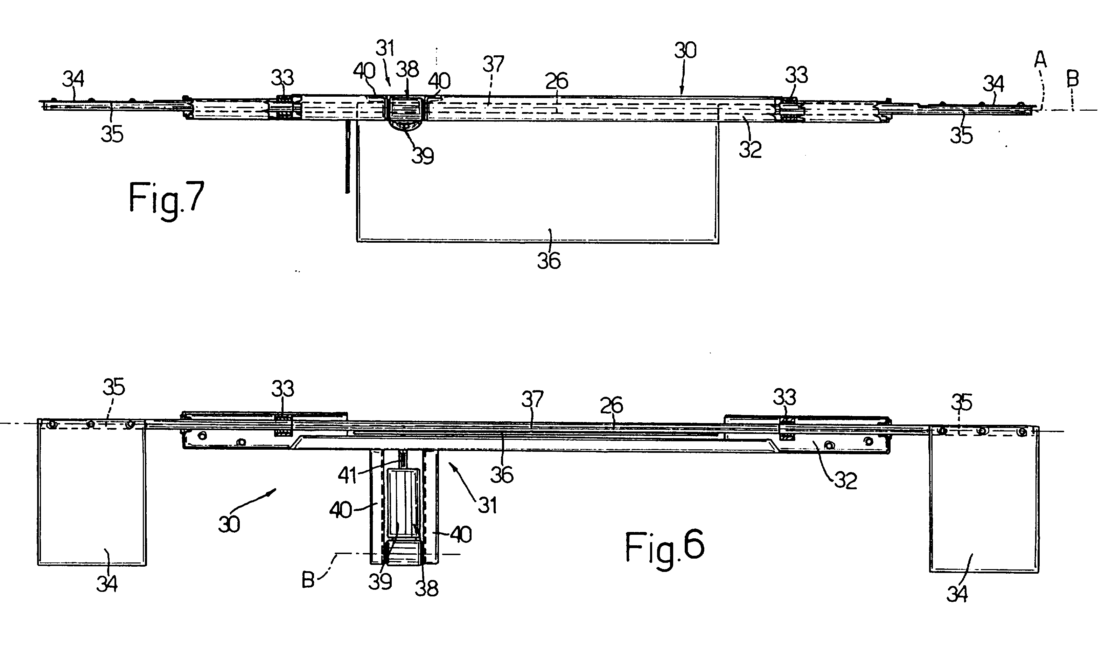

The unit 31 is adapted to rotate the shaft 26 about the axis A between a first operating position (Figs. 2 and 4) in which the members 34 are at right angles to the respective openings 20 and allow these openings 20 to communicate with the respective air intakes 6 while the member 36 is disposed in a position in which it closes the opening 18, and a second operating position (Figs. 3 and 5), in which the members 34 close the respective openings 20 and the member 36 is disposed at right angles to the opening 18 in a position in which it connects this opening 18 to the passenger space 9.

The unit 31 comprises a pneumatic cylinder 38 which has an outer jacket 39 hinged about an axis B parallel to the axis A and a pair of brackets 40 extending at right angles and snap-locked with respect to the member 32 and a rod 41 projecting externally from the jacket 39 and moving axially between a retracted rest position (Fig. 2) and an extended operating position (Fig. 3) in order to rotate the shaft 26 between the above-mentioned first and second operating positions. The unit 31 further comprises a substantially L-shaped lever 42 disposed to pass through an opening 43 provided in the member 36 and having one end hinged on a free end of the rod 41 and an opposite end rigid with the shaft 26.

In operation, the plant 1 may have two different operating configurations.

In a first operating configuration (Figs. 2 and 4), the rod 41 of the cylinder 38 is disposed in its retracted position and consequently maintains the shaft 26 in its first operating position, in which the members 34 allow the chamber 3 to communicate with the air intakes 6 and the member 36 is disposed in the position in which it closes the opening 18. The air therefore enters the plant 1 through the air intakes 6 and flows into the chamber 3 via the ducts 21, after which it passes through the filter 28 and the unit 24 and is driven by the ventilator units 22 into the respective ducts 8.

When the cylinder 38 is actuated, the rod 41 reaches its extended position and rotates the shaft 26 about the axis A bringing it into its second operating position, in which the members 34 close the openings 20, isolating the chamber 3 from the air intakes 6, and the member 36 is disposed in its position in which it connects the chamber 3 and the passenger space 9 of the bus 2. At this point, the plant 1 is disposed in a second operating or recycling configuration (Figs. 3 and 5). The air in the passenger space 9 flows into the chamber 3 via the opening 18, after which it passes through the unit 24 and the filter 28 and reaches the ventilator units 22 which drive it into the respective ducts 8.

The variant shown in Fig. 8 relates to a plant 1', which is similar to the plant 1 and is therefore described only with respect to those aspects which differ from the plant 1, using the same reference numerals to indicate similar or equivalent components or components already described.

The plant 1' differs from the plant 1 in that the control unit 31 comprises a geared motor 45 connected as output to the shaft 26 and a known control device 46 adapted to detect the angular position of the shaft 26 and to control the geared motor 45 in order to rotate the shaft 26 about the axis A into a desired intermediate angular position between the above-mentioned first and second operating positions. In this desired intermediate position of the shaft 26, the members 34 allow communication between the air intakes 6, the chamber 3 and the passenger space 9. The plant 1' may therefore continuously assume any intermediate operating configuration between the above-mentioned first and second configurations so that the air introduced from outside the bus 2 via the air intakes 6 can be mixed in a continuous and proportional manner with the air recycled inside this bus 2.

The advantages that can be achieved are evident from an examination of the characteristic features of the plants 1 and 1' embodied in accordance with the present invention.

In the plants 1 and 1', a single actuator member 26 in particular controls the movement both of the members 34 that selectively connect the chamber 3 with the air intakes 6 and of the member 36 that selectively connects the chamber 3 with the passenger space 9 of the bus 2 and allows air to be recycled into the plant 1, 1'. Consequently, when the pneumatic cylinder 38 is actuated, it is possible to move simply from the first to the second operating configuration. The unit 30 may also be readily adapted to both plants that allow air to pass solely from the outside to the inside of the passenger space 9 and to plants that also provide for the recycling of the air; when the plant is not equipped for this recycling function, it is simply necessary to disconnect the member 36 from the shaft 26.

The position of the air intakes 6 makes it possible to obtain a path P for the air that is substantially horizontal and this factor, combined with the structural simplicity of the units 30 and 31, reduces the bulk of the layout of the plant 1, 1' at the location of the chamber 3. It is not therefore necessary to provide the upper portion 4 of the bus 2 with a projecting zone, providing aesthetic, aerodynamic and economic advantages.

Lastly, in the case of the plant 1', the use of the geared motor 45 makes it possible to dispose the shaft 26 in a desired intermediate position between the above-mentioned first and second operating positions so that the air coming from outside can be mixed in predetermined proportions with the air recycled into the plant 1'.

It is evident that modifications and variants may be made to the plants 1 and 1' provided that they do not depart from the scope of protection of the claims.

## Claims

1. A passenger transport vehicle (2), in particular a bus, with a ventilation plant (1, 1') comprising ventilation and air conditioning means (5) housed in a chamber (3) obtained within an upper portion (4) of the vehicle (2), external air intake means (6) communicating with said chamber (3), a pair of ventilation ducts (8) communicating with said chamber (3) and adapted to distribute air into the vehicle (2), first interceptor means (34) interposed between said chamber (3) and said air intake means (6) that can be moved for the selective connection of said chamber (3) with said air intake means (6), and actuator means (26, 31) adapted to move said first interceptor means (34), characterised in that said air intake means comprise a pair of air intakes (6) provided in respective opposite lateral walls (7) of the vehicle (2) communicating with respective first openings (20) of the chamber (3) and each defining a starting portion of a substantially horizontal path (P) for the air extending from said air intake (6) to a relative said ventilation duct (8), said actuator means comprising a single actuator member (26) borne by said upper portion (4) of the vehicle (2) in such a way as to rotate about an axis of rotation (A) transverse to said lateral walls (7) of the vehicle (2) and means (31) for controlling said actuator member (26), said first interceptor means comprising a pair of first flap members (34) rigidly snap-locked on said actuator member (26) and disposed at the location of respective said first openings (20), said control means (31) being adapted to rotate said actuator member (26) about said axis of rotation (A) between a first operating position in which said first flap members (34) bring said air intakes (6) into communication with said respective first openings (20), and a second operating position in which said first flap members (34) close the respective said first openings (20), the vehicle (2) having a substantially plane upper wall (10).

2. A vehicle as claimed in claim 1, characterised in that said actuator member comprises a shaft (26) having an axis coincident with said axis of rotation (A) and moving between said first and second operating positions, said first openings (20) being aligned with one another and having respective axes transverse to said axis of rotation (A) and parallel to said lateral walls (7), said first flap members (34) being radially snap-locked on respective opposite axial end portions (35) of said shaft (26) and being angularly aligned with one another.

3. A vehicle as claimed in claim 1 or 2, characterised in that said chamber (3) has a second opening (18) adapted to bring said chamber (3) into communication with a passenger space (9) of the vehicle (2), said plant (1, 1') comprising second interceptor means (36) rigid with said actuator member (26) and moving therewith between a closure position in which said second opening (18) is closed and a connection position in which said passenger space (9) is connected with said second opening (18), said closure and connection positions of said second interceptor means (36) corresponding to said first and second operating positions of said actuator member (26).

4. A vehicle as claimed in claim 3, characterised in that said second opening (18) is interposed between said first openings (20) and is aligned therewith, said second interceptor means comprising a second flap member (36) radially snap-locked on a central portion (37) of said shaft (26) and angularly spaced by a predetermined angle from said first flap members (34) so that, in said first operating position of said shaft (26), said second flap member (36) is disposed in said closure position and, in said second operating position of said shaft (26), said second member (36) is disposed in said connection position.

5. A vehicle as claimed in claim 3, characterised in that said angle is 90°.

6. A vehicle as claimed in any one of the preceding claims, characterised in that said control means (31) comprise:
- a support member (32) for said actuator member (26) rigid with said upper portion (4) of the vehicle (2);
- a pneumatic cylinder (38) having an outer jacket (39) hinged on said support member (32) and a rod (41) projecting externally from said jacket (39) and moving axially in order to rotate said actuator member (26) between said first and second operating positions;
- a lever (42) having one end hinged on said rod (41) and an opposite end rigid with said actuator member (26).

7. A vehicle as claimed in any one of claims 1 to 5, characterised in that said control means (31) comprise a geared motor (45) connected as output to said actuator member (26) and a control device (46) adapted to detect the angular position of said actuator member (26) and to control said geared motor (45) in order to rotate said actuator member (26) about said axis of rotation (A) into a desired intermediate angular position between said first and second operating positions.

## Patentansprüche

1. Passagierfahrzeug (2), insbesondere ein Omnibus, mit einer Lüftungsanlage (1, 1'), welches Ventilations- und Klimaanlageneinrichtungen (5), die in einer Kammer (3) innerhalb eines oberen Abschnitts (4) des Fahrzeugs (2) untergebracht sind, Außenlufteinlasseinrichtungen (6), die mit der Kammer (3) in Verbindung stehen, ein Paar von Ventilationsleitungen (8), die mit der Kammer (3) in Verbindung stehen und daran angepasst sind, Luft in dem Fahrzeug (2) zu verteilen, ersten Einlaufschachteinrichtungen (34), die sich zwischen der Kammer (3) und den Lufteinlasseinrichtungen (6) befinden, welche zur wahlweisen Verbindung der Kammer (3) mit den Lufteinlasseinrichtungen (6) bewegt werden können, und Betätigungseinrichtungen (26, 31) aufweist, die zur Bewegung der ersten Einlaufschachteinrichtungen (34) anpassbar sind, dadurch gekennzeichnet, dass die Lufteinlasseinrichtungen ein Paar von Lufteinlässen (6) aufweisen, welche in entsprechenden gegenüberliegenden, seitlichen Wänden (7) des Fahrzeugs (2) vorgesehen sind, die mit entsprechenden ersten Öffnungen (20) der Kammer (3) in Verbindung stehen und jeweils einen Anfangsabschnitt eines im Wesentlichen horizontalen Weges (P) der Luft definieren, welcher sich von dem Lufteinlass (6) zu einer entsprechenden Ventilationsleitung (8) erstreckt, wobei die Betätigungseinrichtungen ein einzelnes Betätigungselement (26), das in dem oberen Abschnitt (4) des Fahrzeugs (2) in einer Art und Weise untergebracht ist, dass es sich um eine Drehachse (A) transversal zu den Seitenwänden (7) des Fahrzeugs (2) dreht, und Einrichtungen (31) zur Steuerung des Betätigungselements (26) aufweisen, wobei die ersten Einlaufschachteinrichtungen ein Paar von ersten Klappenelementen (34) aufweisen, die an dem Betätigungselement (26) durch eine Schnappverbindung fest verschließbar sind und an einer Stelle an entsprechenden ersten Öffnungen (20) angeordnet sind, wobei die Steuereinrichtungen (31) daran angepasst sind, das Betätigungselement (26) um die Drehachse (A) zwischen einer ersten Betriebsposition, in welcher die ersten Klappenelemente (34) die Lufteinlässe mit den entsprechenden Öffnungen (20) in Verbindung bringen, und einer zweiten Betriebsposition dreht, in welcher die ersten Klappenelemente (34) die entsprechenden ersten Öffnungen schließen, wobei das Fahrzeug (2) eine im Wesentlichen ebene obere Wand (10) aufweist.

2. Fahrzeug nach Anspruch 1, dadurch gekennzeichnet, dass das Betätigungselement eine Welle (26) mit einer Achse aufweist, die mit der Drehachse (A) zusammenfällt und sich zwischen der ersten und zweiten Betriebsposition bewegt, wobei die ersten Öffnungen (20) miteinander ausgerichtet sind und entsprechende Achsen aufweisen, die transversal zur Drehachse (A) und parallel zu den Seitenwänden (7) verlaufen, wobei die ersten Klappenelemente (34) an entsprechenden gegenüberliegenden, axialen Endabschnitten (35) der Welle (26) durch eine Schnappverbindung radial verschließbar und im Winkel zueinander ausgerichtet sind.

3. Fahrzeug nach Anspruch 1 oder 2, dadurch gekennzeichnet, dass die Kammer (3) eine zweite Öffnung (18) aufweist, welche daran angepasst ist, die Kammer (3) mit dem Fahrgastraum (9) des Fahrzeugs (2) in Verbindung zu bringen, wobei die Anlage (1, 1') zweite Einlaufschachteinrichtungen (36) aufweist, welche mit dem Betätigungselement (26) starr verbunden sind und sich dadurch zwischen einer Schließposition, in welcher die zweite Öffnung (18) geschlossen ist, und einer Verbindungsposition bewegen, in welcher der Fahrgastraum (8) mit der zweiten Öffnung (18) verbunden ist, wobei die Schließ- und Verbindungsposition der zweiten Einlaufschachteinrichtungen (36) der ersten und zweiten Betriebsposition des Betätigungselements (26) entsprechen.

4. Fahrzeug nach Anspruch 3, dadurch gekennzeichnet, dass sich die zweite Öffnung (18) zwischen den ersten Öffnungen befindet und damit ausgerichtet ist, wobei die zweiten Einlaufschachteinrichtungen ein zweites Klappenelement (36) aufweisen, das an einem zentralen Abschnitt (37) der Welle (26) durch eine Schnappverbindung radial verschließbar ist und im Winkel durch einen vorbestimmten Winkel von den ersten Klappenelementen (34) beabstandet ist, so dass das zweite Klappenelement (36) in der ersten Betriebsposition der Welle (26) in der Schließposition angeordnet ist, und wobei das zweite Element (36) in der zweiten Betriebsposition der Welle (26) in der Verbindungsposition angebracht ist.

5. Fahrzeug nach Anspruch 3, dadurch gekennzeichnet, dass der Winkel 90° beträgt.

6. Fahrzeug nach einem der vorhergehenden Ansprüche,
dadurch gekennzeichnet, dass die Steuereinrichtungen (31) aufweisen:
- ein Stützelement (32) für das Betätigungselement (26), welches mit dem oberen Abschnitt (4) des Fahrzeugs (2) starr verbunden ist;
- einen pneumatischen Zylinder (38) mit einem äußeren Mantel (39), der an dem Stützelement (32) drehbar gelagert ist, und einer Stange (41), welche sich nach außen von dem Mantel (39) erstreckt und sich axial bewegt, um das Betätigungselement (26) zwischen der ersten und zweiten Betriebsposition zu drehen;
- einen Hebel mit einem Ende, welches an der Stange (41) drehbar gelagert ist, und einem gegenüberliegenden Ende, welches mit dem Betätigungselement (26) fest verbunden ist.

7. Fahrzeug nach einem der Ansprüche 1 bis 5, dadurch gekennzeichnet, dass die Steuereinrichtungen (31) einen Getriebemotor (45), welcher als Ausgang mit dem Betätigungselement (26) verbunden ist, und eine Steuervorrichtung (46) aufweist, welches daran angepasst ist, die Winkelposition des Betätigungselements (26) zu erfassen und den Getriebemotor (45) zu steuern, um das Betätigungselement (26) um die Drehachse (A) in eine gewünschte, dazwischenliegende Winkelposition zwischen der ersten und zweiten Betriebsposition zu drehen.

## Revendications

1. Véhicule de transport de passagers (2), en particulier un autobus, doté d'une installation de ventilation (1, 1') comprenant des moyens (5) d'aération et de climatisation logés dans un compartiment (3) réalisé dans une portion supérieure (4) du véhicule (2), des moyens d'admission d'air extérieurs (6) communiquant avec ledit compartiment (3), deux conduits d'aération (8) communiquant avec ledit compartiment (3) et adapté pour distribuer de l'air dans le véhicule (2), des premiers moyens d'interception (34) interposés entre ledit compartiment (3) et lesdits moyens d'admission d'air (6) qui sont mobiles pour raccorder sélectivement ledit compartiment (3) auxdits moyens d'admission d'air (6), et des moyens d'actionnement (26, 31) adaptés pour déplacer lesdits premiers moyens d'interception (34), caractérisé en ce que lesdits moyens d'admission d'air comprennent deux entrées d'air (6) réalisées dans des parois latérales opposées respectives (7) du véhicule (2) communiquant avec des premières ouvertures respectives (20) du compartiment (3) et chacune d'elles définissant une portion de départ d'un trajet (P) de circulation de l'air sensiblement horizontal s'étendant de ladite entrée d'air (6) à un conduit d'aération respectif (8), lesdits moyens d'actionnement comprenant un élément d'actionnement unique (26) supporté par ladite portion supérieure (4) du véhicule (2) de façon à tourner autour d'un axe de rotation (A) transversal auxdites parois latérales (7) du véhicule (2) et des moyens (31) pour commander ledit élément d'actionnement (26), lesdits premiers moyens d'interception comprenant deux premiers éléments formant volets (34) verrouillés solidement par encliquetage sur ledit élément d'actionnement (26) et agencés au niveau desdits premières ouvertures respectives (20), lesdits moyens de commande (31) étant adaptés pour faire tourner ledit élément d'actionnement (26) autour dudit axe de rotation (A) entre une première position de fonctionnement dans laquelle lesdits premiers éléments formant volets (34) mettent lesdites entrées d'air en communication avec lesdites premières ouvertures respectives (20), et une seconde position de fonctionnement dans laquelle lesdits premiers éléments formant volets (34) ferment lesdites premières ouvertures respectives (20), la paroi supérieure (10) du véhicule (2) étant sensiblement plane.

2. Véhicule selon la revendication 1, caractérisé en ce que ledit élément d'actionnement comprend un arbre (26) ayant un axe coïncidant avec ledit axe de rotation (A) et se déplaçant entre lesdites première et seconde positions de fonctionnement, lesdites premières ouvertures (20) étant alignées entre elles et ayant des axes respectifs transversaux audit axe de rotation (A) et parallèles auxdites parois latérales (7), lesdits premiers éléments formant volets (34) étant verrouillés radialement par encliquetage sur des portions d'extrémité respectives axiales opposées (35) dudit arbre (26) et étant alignés angulairement l'un avec l'autre.

3. Véhicule selon la revendication 1 ou 2, caractérisé en ce que ledit compartiment (3) comporte une seconde ouverture (18) adaptée pour mettre ledit compartiment (3) en communication avec un espace (9) destiné aux passagers du véhicule (2), ladite installation (1, 1') comprenant des seconds moyens d'interception (36) solidaires dudit élément d'actionnement (26) et se déplaçant avec celui-ci entre une position de fermeture dans laquelle ladite seconde ouverture (18) est fermée et une position de raccordement dans laquelle ledit espace (9) destiné aux passagers est raccordé à ladite seconde ouverture (18), lesdites positions de fermeture et de raccordement desdits seconds moyens d'interception (36) correspondant auxdites première et seconde positions dudit élément d'actionnement (26).

4. Véhicule selon la revendication 3, caractérisé en ce que ladite seconde ouverture (18) est interposée entre lesdites premières ouvertures (20) et est alignée avec celles-ci, lesdits seconds moyens d'interception comprenant un second élément formant volet (36) verrouillé radialement par encliquetage sur une portion centrale (37) dudit arbre (26) et distant angulairement d'un angle prédéterminé desdits premiers éléments formant volets (34) de sorte que, dans ladite première position de fonctionnement dudit arbre (26), ledit second élément formant volet (36) se trouve dans ladite position de fermeture et, dans ladite seconde position de fonctionnement dudit arbre (26), ledit second élément (36) se trouve dans ladite position de raccordement.

5. Véhicule selon la revendication 3, caractérisé en ce que ledit angle est de 90°.

6. Véhicule selon l'une quelconque des revendications précédentes, caractérisé en ce que lesdits moyens de commande (31) comprennent :
- un élément formant support (32) pour ledit élément d'actionnement (26) solidaire de ladite portion supérieure (4) du véhicule (2) ;
- un vérin pneumatique (38) comportant une chemise extérieure (39) articulée sur ledit élément formant support (32) et une tige (41) s'étendant à l'extérieur de ladite chemise (39) et se déplaçant axialement afin de faire tourner ledit élément d'actionnement (26) entre lesdites première et seconde positions de fonctionnement ;
- un levier (42) comportant une extrémité articulée sur ladite tige (41) et une extrémité opposée solidaire dudit élément d'actionnement (26).

7. Véhicule selon l'une quelconque des revendications 1 à 5, caractérisé en ce que lesdits moyens de commande (31) comprennent un moteur à engrenage (45) dont la sortie est raccordée audit élément d'actionnement (26) et un dispositif de commande (46) adapté pour détecter la position angulaire dudit élément d'actionnement (26) et pour commander ledit moteur à engrenage (45) afin de faire tourner ledit élément d'actionnement (26) autour dudit axe de rotation (A) pour venir dans une position angulaire intermédiaire désirée entre lesdites première et seconde positions de fonctionnement.
